# EUROPEAN PATENT APPLICATION

(11) **EP 4 303 476 A1**
(43) Date of publication of application: **10.01.2024**
(21) Application number: 22762882.3
(22) Date of filing: 02.02.2022
(51) Int. Cl.: F16K 31/04

(54) **FLOW RATE CONTROL VALVE**

(30) Priority: 04.03.2021 JP 2021034580
(71) Applicant: Fujikoki Corporation, Tokyo 158-0082 (JP)
(72) Inventor: HISHIYA, Kohei, Tokyo 158-0082 (JP); OHUCHI, Tomoari, Tokyo 158-0082 (JP); SUGANUMA, Takeshi, Tokyo 158-0082 (JP)
(74) Representative: Ter Meer Steinmeister & Partner
(86) International application number: PCT/JP2022/004112
(87) International publication number: WO 2022/185824

(57) **Abstract**

Provided is a flow rate control valve that prevents foreign matter from being bitten therein and that can perform appropriate flow rate control. The flow rate control valve includes a valve body provided with a valve seat, a reduction unit configured to reduce and transmit a rotation of a motor to a rotating body, a conversion mechanism configured to move a moving body in an axial direction according to a rotational movement of the rotating body, and a valve element configured to move according to an axial direction movement of the moving body and move in reciprocating motion with respect to the valve seat, wherein a first engagement portion provided on the rotating body and a second engagement portion provided on the valve body are configured to move toward or away from each other according to a rotation of the rotating body, and wherein after the valve element is seated on the valve seat, the first engagement portion and the second engagement portion come into contact with each other, and a rotation of the rotating body is stopped.

## Description

### [Technical Field]

The present invention relates to a flow rate control valve.

### [Background Art]

For example, refrigeration cycles adopted in room air conditioners and car air conditioners are equipped with a flow rate control valve for controlling the flow rate of a refrigerant, in addition to a compressor, an outdoor heat exchanger, an indoor heat exchanger, an expansion valve, etc.

A gear type motor-operated valve disclosed in Patent Literature 1 is known as one example of such a flow rate control valve. This gear type motor-operated valve reduces a rotational force output from a stepping motor via a reduction mechanism, and further converts the reduced rotational force into an axial direction force using a screw mechanism and transmits the same to a valve element. Thereby, the valve element is separated from or seated on a valve seat, by which valve opening and closing operations are executed.

### [Citation List]

### [Patent Literature]

[PTL 1] Publication of Japanese Patent Laid-Open Publication No. 2003-232465

### [Summary of Invention]

### [Technical Problem]

In the gear type motor-operated valve illustrated in Patent Literature 1, the rotational force of the stepping motor is reduced by a reduction device, such that a pressing force applied to the valve seat from the valve element when closing the valve is relatively high, and there is an advantage in that a sealing capability when closing the valve can be maintained to a high level.

Meanwhile, there is a risk that foreign matter such as metal may be mixed in the refrigerant being circulated within the refrigeration cycle. If such foreign matter enters the gear type motor-operated valve and is inserted between the valve element and the valve seat when the valve is closed and sandwiched therebetween with strong pressing force, a so-called biting of foreign matter may occur.

An object of the present invention is to provide a flow rate control valve capable of suppressing foreign matter from being bitten therein and capable of performing appropriate flow rate control.

### [Means to Solve the Problem]

In order to achieve the above-mentioned object, a flow rate control valve according to the present invention includes
a valve body provided with a valve seat;
a reduction unit configured to reduce and transmit a rotation of a motor to a rotating body;
a conversion mechanism configured to move a moving body in an axial direction according to a rotational movement of the rotating body; and
a valve element configured to move according to an axial direction movement of the moving body and move in reciprocating motion with respect to the valve seat;
wherein a first engagement portion provided on the rotating body and a second engagement portion provided on the valve body are configured to move toward or away from each other according to a rotation of the rotating body, and
wherein, after the valve element is seated on the valve seat, the first engagement portion and the second engagement portion come into contact with each other, and a rotation of the rotating body is stopped.

### [Effects of Invention]

The present invention enables to provide a flow rate control valve capable of suppressing foreign matter from being bitten therein and capable of performing appropriate flow rate control.

### [Brief Description of Drawings]

[FIG. 1] FIG. 1 is a longitudinal cross-sectional view illustrating a valve closed state of a flow rate control valve according to a first embodiment.
[FIG. 2] FIG. 2 is a planar view of a cross-section at line A-A of the flow rate control valve illustrated in FIG. 1.
[FIG. 3] FIG. 3 is a longitudinal cross-sectional view illustrating a valve opened state of the flow rate control valve according to the first embodiment.
[FIG. 4] FIG. 4 is a planar view of a cross-section similar to FIG. 2 of the flow rate control valve illustrated in FIG. 3
[FIG. 5] FIG. 5 is a view illustrating a gear train adopted in the flow rate control valve according to the present embodiment in expansion such that axis lines of the respective gears are positioned within a same plane.
[FIG. 6] FIG. 6 is a cross-sectional view similar to FIG. 5 illustrating a gear train according to a modified example of the present embodiment.
[FIG. 7] FIG. 7 is a longitudinal cross-sectional view illustrating a valve closed state of a flow rate control valve according to a second embodiment.
[FIG. 8] FIG. 8 is a planar view of a cross-section at line B-B of the flow rate control valve illustrated in FIG. 7.
[FIG. 9] FIG. 9 is a longitudinal cross-sectional view illustrating a valve opened state of the flow rate control valve according to the second embodiment.
[FIG. 10] FIG. 10 is a planar view of a cross-section similar to FIG. 8 of the flow rate control valve illustrated in FIG. 9.
[FIG. 11] FIG. 11 is a view illustrating a gear train adopted in the flow rate control valve according to the present embodiment in expansion such that axis lines of the respective gears are positioned within a same plane.
[FIG. 12] FIG. 12 is a longitudinal cross-sectional view illustrating a valve closed state of a flow rate control valve according to a third embodiment.
[FIG. 13] FIG. 13 is a longitudinal cross-sectional view illustrating a valve opened state of the flow rate control valve according to the third embodiment.
[FIG. 14] FIG. 14 is a view illustrating a planetary gear mechanism in an exploded state.
[FIG. 15] FIG. 15 is a perspective view illustrating a lower surface of a gear body and an upper surface of a female screw cylinder.
[FIG. 16] FIG. 16 is a longitudinal cross-sectional view illustrating a valve closed state of a flow rate control valve according to a fourth embodiment.

### [Description of Embodiments]

Now, a flow rate control valve according to an embodiment of the present invention will be described with reference to the drawings. A flow rate control valve according to the present embodiment is disposed within a circulation circuit of a refrigeration cycle apparatus, and it controls a flow rate of refrigerant flowing within the circulation circuit.

### [First Embodiment]

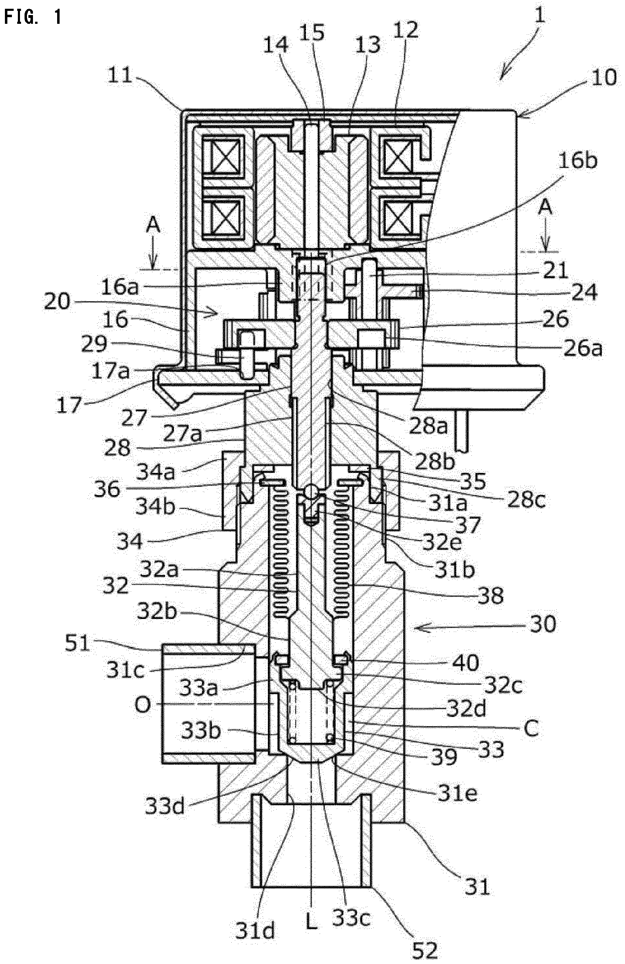

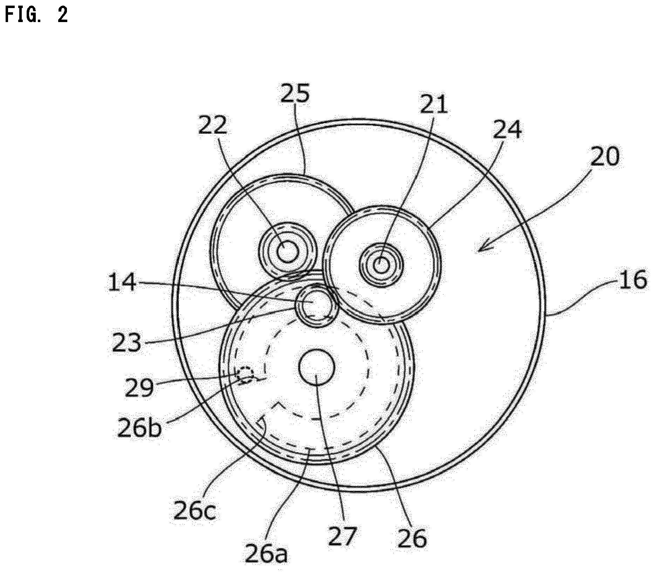

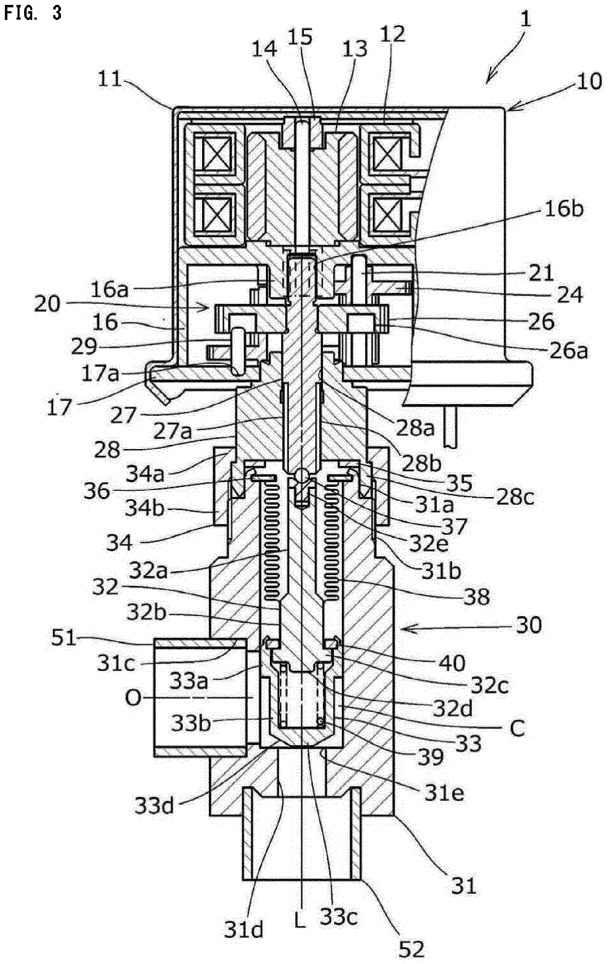

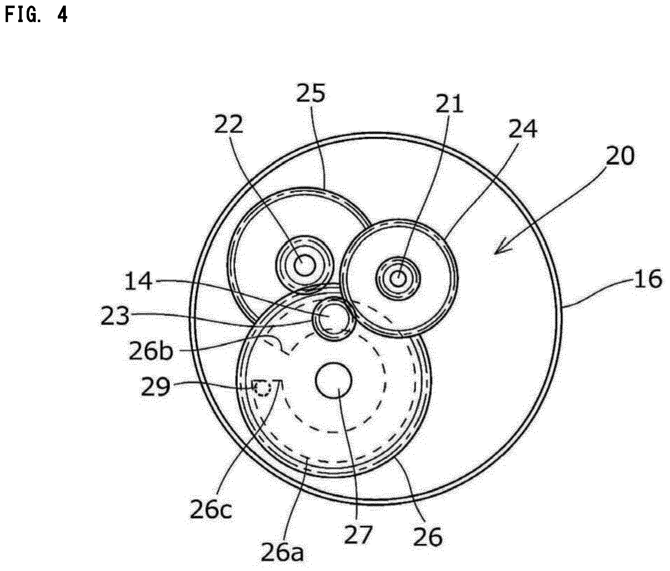

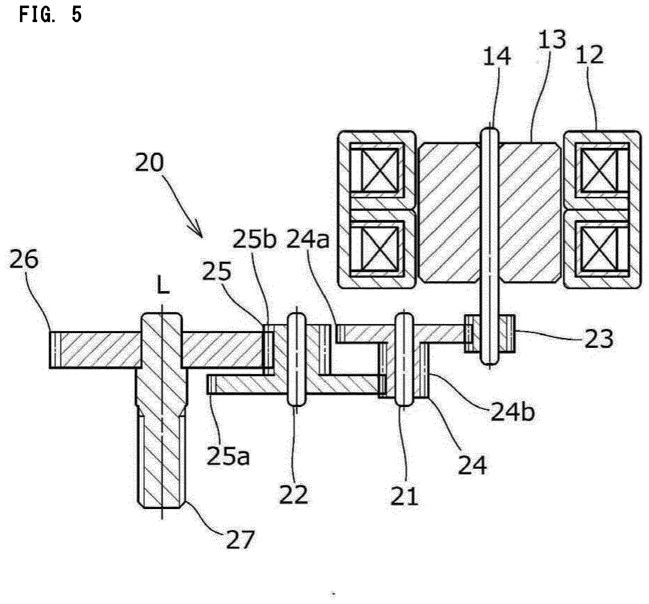

FIG. 1 is a longitudinal cross-sectional view illustrating a valve closed state of a flow rate control valve 1 according to a first embodiment, and FIG. 2 is a planar view of a cross-section taken at line A-A of the flow rate control valve 1 illustrated in FIG. 1. FIG. 3 is a longitudinal cross-sectional view illustrating a valve opened state of the flow rate control valve 1 according to the first embodiment, and FIG. 4 is a planar view of a cross-section similar to FIG. 2 of the flow rate control valve illustrated in FIG. 3. FIG. 5 is a view in which a gear train adopted in the flow rate control valve 1 is illustrated in expansion such that the axis lines of the respective gears are positioned within the same plane, but with a portion thereof simplified.

### (Configuration of Flow Rate Control Valve)

The flow rate control valve 1 includes a driving unit 10, a reduction unit 20, and a valve mechanism unit 30. An axis line of the valve mechanism unit 30 is denoted as L. In the description, a side on which a motor is arranged is referred to as an upper side, and a side on which a valve element is arranged is referred to as a lower side.

At first, the driving unit 10 will be described. In the drawing, the driving unit 10 includes a driving unit case 11, a stator 12 attached to an inner side of the driving unit case 11, a rotor 13 arranged on an inner side in a radial direction of the stator 12, and a drive shaft 14 fixed to the rotor 13. The stator 12 and the rotor 13 constitute a stepping motor. The driving source is not limited to the stepping motor, and it can be a brushless motor or a motor with a brush.

The driving unit case 11 is formed in the shape of a cylinder with a top part, and a bearing 15 is fixed to a lower surface at a center of the top part. The bearing 15 retains the drive shaft 14 rotatably. A support cylinder 16 formed in the shape of a cylinder with a top part is disposed so as to fit to an inner circumference of the driving unit case 11 at a lower side of the stator 12 and the rotor 13. A lower end of the support cylinder 16 is in contact with an upper surface of an annular member 17 sealing the driving unit case 11, and the lower end of the driving unit case 11 and an outer circumference of the annular member 17 are fixed by caulking.

The support cylinder 16 includes a hollow cylinder portion 16a formed on a lower surface at a center of the top part, and a through hole (not shown). A lower end of the drive shaft 14 passes through the through hole of the support cylinder 16 and is rotatably supported in the through hole.

Next, the reduction unit 20 will be described.

The reduction unit 20 includes a first shaft 21 and a second shaft 22 each having both ends thereof retained by a lower surface of the top part of the support cylinder 16 and an upper surface of the annular member 17, a drive gear 23 fixed to a lower end of the drive shaft 14 passing through the through hole of the support cylinder 16, a first transmission gear 24 retained rotatably with respect to the first shaft 21, a second transmission gear 25 retained rotatably with respect to the second shaft 22, a final gear 26, a male screw shaft 27, and a female screw cylinder 28. The final gear 26 constitutes a rotating body, and the male screw shaft 27 constitutes a moving body. The male screw shaft 27 is press-fit to and integrated with the final gear 26.

The first shaft 21 and the second shaft 22 are arranged in parallel with the drive shaft 14. As illustrated in FIG. 5, the first transmission gear 24 is formed by connecting a first input gear portion 24a meshing with the drive gear 23 and a first output gear portion 24b coaxially. The second transmission gear 25 is formed by connecting a second input gear portion 25a meshing with the first output gear portion 24b and a second output gear portion 25b meshing with the final gear 26 coaxially. The respective shafts can be formed of metal and the respective gears can be formed of resin. The drive gear 23, the first transmission gear 24, the second transmission gear 25, and the final gear 26 constitute a gear train.

A number of teeth ZA of the drive gear 23 is smaller than a number of teeth ZB of the first input gear portion 24a. A number of teeth ZC of the first output gear portion 24b is smaller than a number of teeth ZD of the second input gear portion 25a. Further, a number of teeth ZE of the second output gear portion 25b is smaller than a number of teeth ZF of the final gear 26. Therefore, while the rotational force is transmitted from the drive gear 23 to the final gear 26, reduction at a reduction ratio of (ZB/ZA) × (ZD/ZC) × (ZF/ZE) is realized.

With reference to FIGs. 2 and 4, the final gear 26 includes an arc-shaped groove 26a formed on a lower surface thereof so as to surround the male screw shaft 27. One end in a circumferential direction of the arc-shaped groove 26a is referred to as an end portion 26b, and the other end thereof is referred to as an end portion 26c. An angle from the end portion 26b to the end portion 26c is set to a predetermined value. The end portion 26b constitutes a first engagement portion, and the end portion 26c constitutes a third engagement portion. The first engagement portion and the third engagement portion will be described later. As described above, the final gear 26 constitutes a rotating body, but the rotating body is not limited to the final gear 26. For example, any member that rotates by receiving rotational force from the rotor 13 and that includes at least a first engagement portion that moves toward or away from a second engagement portion of a valve body 31 according to rotation can be adopted as the rotating body.

In FIGs. 1 and 2, a hole 17a is formed on an upper surface of the annular member 17, and a lower end of a pin 29 is fit and fixed to the hole 17a. Further, an upper end of the pin 29 is arranged to be positioned within the arc-shaped groove 26a. The pin 29 constitutes a second engagement portion and a fourth engagement portion arranged on the valve body 31. "Arranged on the valve body 31" refers not only to a state being directly arranged on the valve body 31 but also to a state indirectly arranged on another member fixed to the valve body 31. The second engagement portion and the fourth engagement portion will be described later.

The male screw shaft 27 is arranged such that the upper end thereof is fit to an inner circumference 16b of the hollow cylinder portion 16a of the support cylinder 16, and it is arranged in a manner capable of being relatively rotated and displaced in an axial direction within the hollow cylinder portion 16a. Further, the final gear 26 is fit and fixed at an intermediate position of the male screw shaft 27, and a male screw 27a is formed on an outer circumference of a lower end side of the male screw shaft 27.

The female screw cylinder 28 having a hollow cylindrical shape is fit and fixed to an inner circumference to the annular member 17 at an upper end side that is reduced in diameter, and includes a through hole 28a formed to pass through along an axis line L. A female screw 28b engaged with the male screw 27a is formed to a lower end side of the through hole 28a. The female screw cylinder 28 is fixed to the annular member 17, such that when the male screw shaft 27 rotates, the male screw 27a is moved in screwing motion with respect to the female screw 28b, and thereby, an axial direction force is applied from the female screw cylinder 28. Thereby, the male screw shaft 27 is displaced in an axial direction for an amount corresponding to its own rotation angle. The male screw shaft 27 and the female screw cylinder 28 constitute a conversion mechanism.

The female screw cylinder 28 includes a thin cylinder portion 28c enlarged in diameter on a lower end thereof. Further, a cylindrical coupling member 34 is arranged on an outer circumference of the female screw cylinder 28. The coupling member 34 includes an upper end portion 34a that is reduced in diameter fit to the outer circumference of the female screw cylinder 28, and an internal screw portion 34b on an inner circumference of the lower end thereof.

Next, the valve mechanism unit 30 will be described.

The valve mechanism unit 30 includes the valve body 31, a valve stem 32, and a valve element 33.

The valve body 31 made of metal has a relatively thick hollow cylindrical shape, including a reduced diameter portion 31a on an outer circumference at an upper end thereof, and an outside screw portion 31b on the outer circumference at a lower side of the reduced diameter portion 31a. The thin cylinder portion 28c fits to the outer circumference of the reduced diameter portion 31a. By screwing the internal screw portion 34b of the coupling member 34 fit to the outer circumference of the female screw cylinder 28 to the outside screw portion 31b and engaging the coupling member 34, the lower surface of the upper end portion 34a being reduced in diameter comes into contact with and fits to a stepped portion at an upper end of the thin cylinder portion 28c. Thereby, the female screw cylinder 28 can be coupled and fixed to the valve body 31.

A spacer 35 is arranged between a lower surface of the female screw cylinder 28 at an inner circumference of the thin cylinder portion 28c and an upper end of the valve body 31, by which a distance between the valve body 31 and the female screw cylinder 28 when coupling and fixing the members can be adjusted.

A first piping 51 forming a first flow path arranged orthogonal to the axis line L is connected to an opening 31c formed to an outer circumference in the vicinity of the lower end of the valve body 31. An axis line of the first piping 51 is referred to as O.

An opening formed coaxially with the axis line L at a lower end of the valve body 31 constitutes an orifice 31d. Further, an upper end of the orifice 31d constitutes a valve seat 31e. A second piping 52 is connected to the valve body 31 so as to pass through the orifice 31d.

The valve stem 32 is arranged on an inner side of the valve body 31. The valve stem 32 is formed by a small diameter portion 32a, a large diameter portion 32b, a flange portion 32c, and a small-diameter protruded portion 32d, which are coaxially consecutively connected. A ball retaining portion 32e which is formed as a separate member as the valve stem 32 is attached to an upper end of the small diameter portion 32a facing a lower end of the male screw shaft 27. A ball 37 made of metal is arranged between a recessed portion at a center of a lower end of the male screw shaft 27 and a recessed portion at a center of an upper end of the ball retaining portion 32e.

An annular plate 36 is fixed by caulking to the inner circumference of the upper end of the valve body 31. A bellows 38 made of metal connects the lower surface of the annular plate 36 and the outer circumference of the upper end of the large diameter portion 32b of the valve stem 32 in a manner covering the small diameter portion 32a of the valve stem 32. Therefore, during use of the flow rate control valve 1, an outer side of the bellows 38 will be in contact with the refrigerant at the inner side of the valve body 31, and an inner side of the bellows 38 will be in contact with air. The outer side of the bellows 38 in the interior of the valve body 31 constitutes a valve chamber C.

The valve element 33 having a bottomed cylinder shape is arranged at a lower side of the valve stem 32. The valve element 33 is formed by a large cylinder portion 33a on an upper end side that is movable in sliding motion against the inner circumference of the valve body 31, a small cylinder portion 33b on a lower end side, and a bottom portion 33c, which are consecutively connected. A tapered surface 33d that is axisymmetric to the axis line L is formed on a lower surface side of the bottom portion 33c. An upper end of the large cylinder portion 33a is fixed by caulking to the outer circumference of an annular slide plate 40. The slide plate 40 is fit slidably along the direction of axis line L to the large diameter portion 32b of the valve stem 32, and it is prevented from moving further toward the lower side of the valve stem 32 by coming into contact with the flange portion 32c. The valve stem 32 and the valve element 33 are relatively displaceable for a predetermined distance in the axial direction.

A coil spring 39 serving as an urging member is arranged on an inner circumference side of the small cylinder portion 33b of the valve element 33. An upper end of the coil spring 39 comes into contact with a lower end of the valve stem 32 in a circumference of the small-diameter protruded portion 32d, and a lower end of the coil spring 39 comes into contact with an upper surface of the bottom portion 33c of the valve element 33. Therefore, the valve element 33 is constantly urged downward with respect to the valve stem 32 by the coil spring 39. The male screw shaft 27 can also be formed integrally with the valve stem 32 and the valve element 33.

### (Operation of Flow Rate Control Valve)

An operation of the flow rate control valve 1 according to the present embodiment will be described. The first piping 51 and the second piping 52 are connected to the refrigeration cycle, wherein the first piping 51 serves as an inlet-side piping and the second piping 52 serves as an outlet-side piping.

### (When Closing Valve)

In a valve opened state, when power is supplied from an external power supply to the driving unit 10 according to a control signal and the drive shaft 14 rotates in one direction, the rotary motion is reduced through the gear train of the reduction unit 20 and transmitted to the male screw shaft 27. The rotary motion transmitted to the male screw shaft 27 is converted via a conversion mechanism of the reduction unit 20 into an axial direction movement, by which the male screw shaft 27 is displaced downward together with the final gear 26, that is, the male screw shaft 27 is moved toward the lower side in the axial direction according to the rotation of the final gear 26. Even in a case where the final gear 26 is displaced in the axial direction, the meshing thereof with the second transmission gear 25 will not be disengaged.

When the male screw shaft 27 is displaced downward, the valve stem 32 moves downward by being pressed via the ball 37. In a state where the valve stem 32 moves downward, the bellows 38 expands, the valve element 33 moves downward in a state being pressed by the coil spring 39, and the tapered surface 33d is seated on the valve seat 31e. In this state, the coil spring 39 exerts a shock absorbing effect of weakening the shock of seating.

Further, by the rotation of the valve stem 32, the valve stem 32 is lowered and the coil spring 39 is compressed, by which the tapered surface 33d is pressed against the valve seat 31e with a predetermined urging force. In this state, the slide plate 40 moves in sliding motion along the outer circumference of the large diameter portion 32b of the valve stem 32, allowing the valve stem 32 and the valve element 33 to be relatively displaced against the urging force of the coil spring 39. As described above, since a predetermined preload is applied and the valve closed state is ensured, the flow of refrigerant from the first piping 51 through the valve chamber C toward the second piping 52 is cutoff. This state is illustrated in FIG. 1.

Further during this state, fluid pressure within the valve chamber C acts on the outer surface of the bellows 38, such that if fluid pressure of a predetermined value or greater acts thereon, the bellows 38 is acted in the expanding direction, and the valve element 33 can be moved in the opening direction together with the valve stem 32.

The rotational force output from the driving unit 10 is reduced by the reduction unit 20, and therefore, the force in which the male screw shaft 27 and the valve stem 32 are moved in the axial direction is increased. Therefore, when the rotational force from the driving unit 10 is applied further in a state where the bottom of the valve stem 32 is in contact with the valve element 33, the pressing force generated between the tapered surface 33d and the valve seat 31e becomes excessive.

In the present embodiment, a structure is provided to suppress the pressing force generated between the tapered surface 33d and the valve seat 31e from becoming excessive. Specifically, in a state where the final gear 26 rotates together with the male screw shaft 27, the pin 29 moves relatively along the arc-shaped groove 26a, and the pin 29 approximates the end portion 26b. Further, after the tapered surface 33d is seated on the valve seat 31e, in a state where the male screw shaft 27 rotates for a predetermined angle, the pin 29 (second engagement portion) comes into contact with the end portion 26b (first engagement portion) of the arc-shaped groove 26a, such that further rotation of the final gear 26 is prevented, and the valve stem (valve element) will not be lowered further. Such a state is illustrated in FIG. 2. That is, the pin 29 (second engagement portion) and the end portion 26b (first engagement portion) respectively function as a lower limit-side stopper of the valve element.

Since the lowering of the male screw shaft 27 and the valve stem 32 is stopped thereby, the pressing force applied to the valve element 33 with respect to the valve stem 32 will only be the urging force of the coil spring 39, such that excessive increase of pressing force generated between the tapered surface 33d and the valve seat 31e can be avoided. In this state, even if a foreign matter is bitten between the tapered surface 33d and the valve seat 31e, indentation will not occur since the pressing force is relatively small, such that if the foreign matter drops out when the valve is opened for the next time, a good sealing efficiency between the tapered surface 33d and the valve seat 31e can be ensured.

### (When Opening Valve)

Meanwhile, in a state where the drive shaft 14 rotates in an opposite direction by power fed from an external power supply according to a control signal of reverse characteristics, the force is reduced through the gear train of the reduction unit 20 and transmitted to the male screw shaft 27. The rotary motion transmitted to the male screw shaft 27 is converted into an axial direction movement through the conversion mechanism of the reduction unit 20, and thereby, the male screw shaft 27 is displaced upward together with the final gear 26.

In a state where the male screw shaft 27 is displaced upward, the force pressing the valve stem 32 toward the valve closing direction is eliminated, such that the bellows 38 receiving refrigerant pressure within the valve chamber C expands and the valve stem 32 elevates. In a state where the valve stem 32 elevates, the slide plate 40 is locked by the flange portion 32c of the valve stem 32, and thereafter, the valve element 33 elevates together with the valve stem 32, such that the tapered surface 33d separates from the valve seat 31e. Such a state is illustrated in FIG. 3.

In this state, the refrigerant entering the valve chamber C from the first piping 51 passes through a gap formed between the tapered surface 33d and the valve seat 31e, and flows out through the orifice 31d into the second piping 52. Since the gap between the tapered surface 33d and the valve seat 31e changes according to the rotation angle of the drive shaft 14, by adjusting the rotation angle of the drive shaft 14, the amount of refrigerant flowing from the first piping 51 to the second piping 52 can be adjusted.

According further to the present embodiment, even if the drive shaft 14 rotates excessively to the opposite direction due to a step-out phenomenon, for example, the pin 29 (fourth engagement portion) comes into contact with the end portion 26c (third engagement portion) at the opposite side of the arc-shaped groove 26a, such that further rotation of the final gear 26 is prevented, and the valve stem (valve element) will not elevate further. Such a state is illustrated in FIG. 4. That is, the pin 29 (fourth engagement portion) and the end portion 26c (third engagement portion) respectively function as an upper limit-side stopper of the valve element.

### (Modified Example)

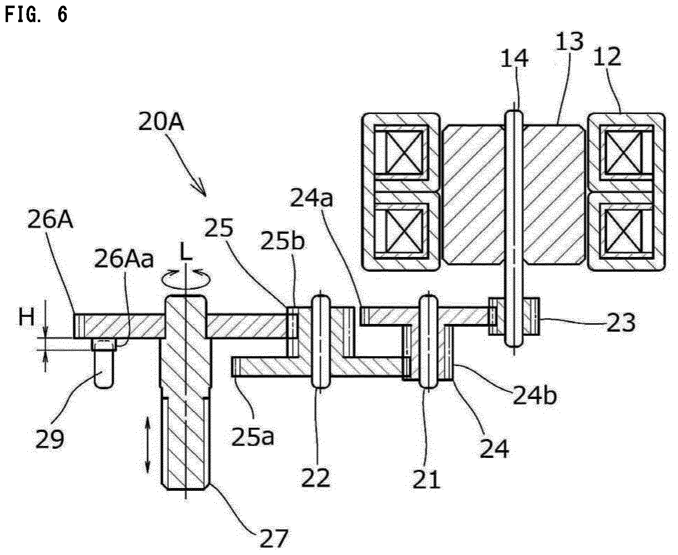

FIG. 6 is a cross-sectional view similar to FIG. 5 illustrating a gear train according to a modified example of the present embodiment. A reduction unit 20A according to the present modified example also includes the first shaft 21, the second shaft 22, the drive gear 23, the first transmission gear 24, the second transmission gear 25, a final gear 26A, and the male screw shaft 27. Components common to the embodiments described above are denoted with the same reference numbers, and descriptions thereof are omitted.

In the present modified example, unlike the embodiment described above, an arc-shaped groove is not disposed on a lower surface of the final gear 26A, and instead, a projection 26Aa is formed at a position distant from the axis line L on a lower surface. The projection 26Aa constitutes a first engagement portion.

Similar to the embodiment described above, the final gear 26A moves up and down together with the male screw shaft 27 according to rotation, such that the projection 26Aa descends in screw motion around the axis line L in a state where the valve element 33 moves from the valve opened state toward the valve closing direction. Therefore, by adjusting a height H of the projection 26Aa in advance, the projection 26Aa can be caused to pass through (not come into contact with) the upper part of the pin 29 (second engagement portion) on the first turn, and to have the projection 26Aa (first engagement portion) come into contact with the pin 29 for the first time on the second turn (refer to FIG. 5), such that further rotation of the output gear is prevented. That is, the pin 29 (second engagement portion) and the projection 26Aa (first engagement portion) can respectively function as a lower limit-side stopper.

According to the present modified example, a freedom of selection of timing of having the projection 26Aa come into contact with the pin 29 is increased, such that an appropriate reduction ratio of the reduction unit 20A can be selected. Further according to the modified example, since a groove is not formed, the final gear 26A can be made thinner, such that the weight of the flow rate control valve can be reduced.

Further, in order to prevent respective end surfaces at the tip of the projection 26Aa and the pin 29 from coming into contact with each other, it is preferable that the end surfaces at the tip of the projection 26Aa and the pin 29 are not flat, and that they have an inclined surface parallel to the inclination of the screw thread of the male screw (female screw).

### [Second Embodiment]

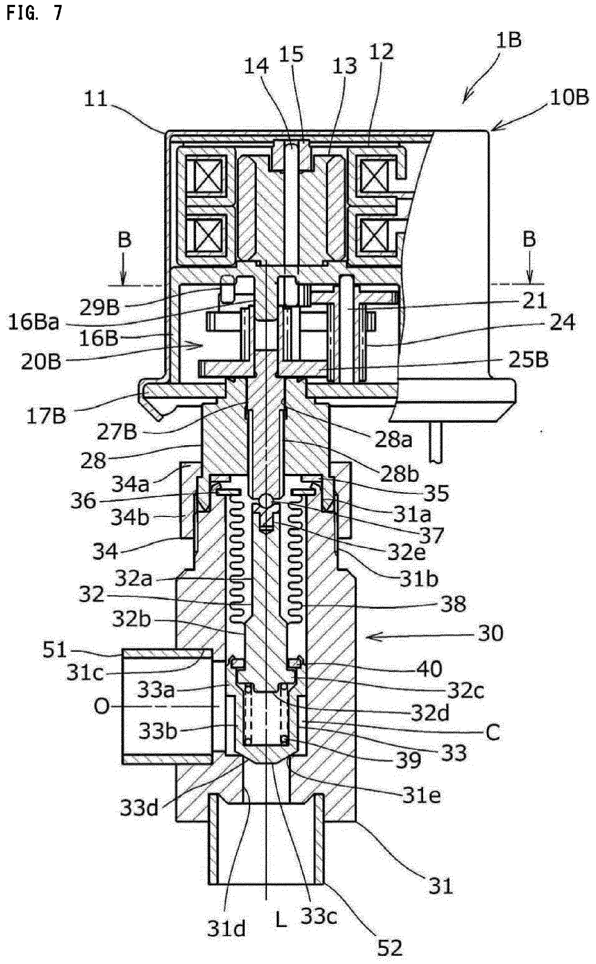

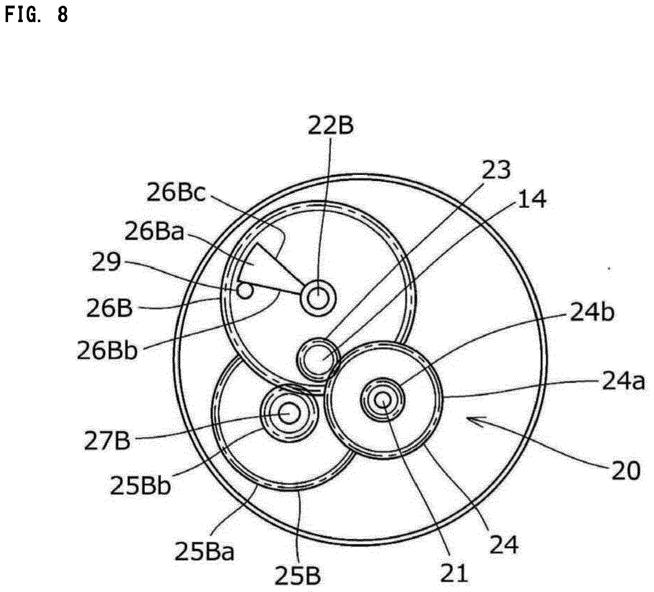

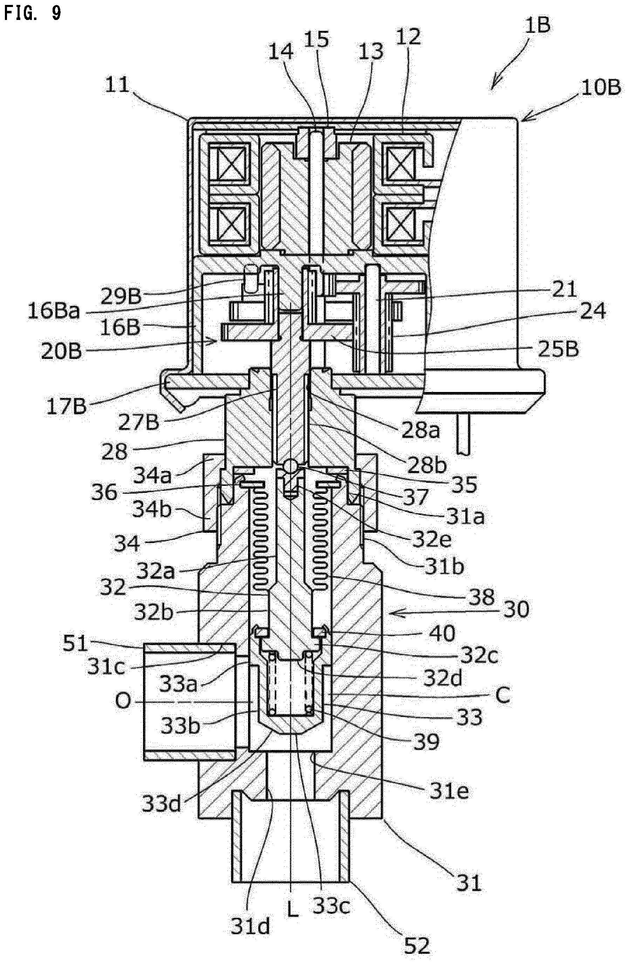

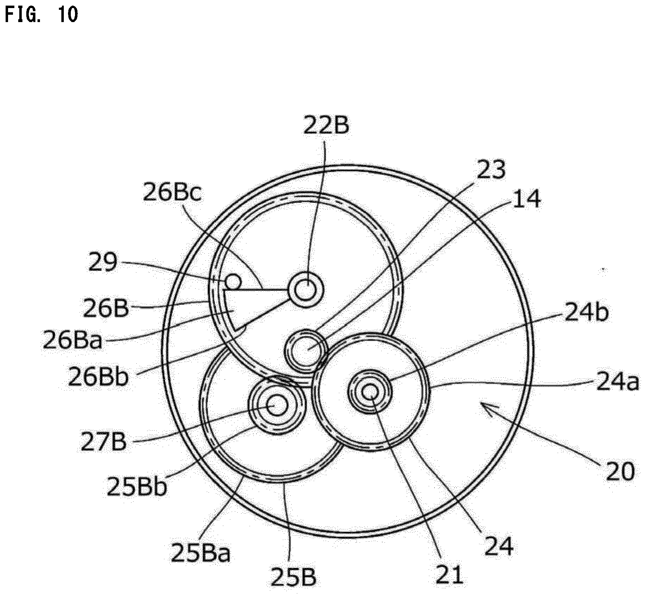

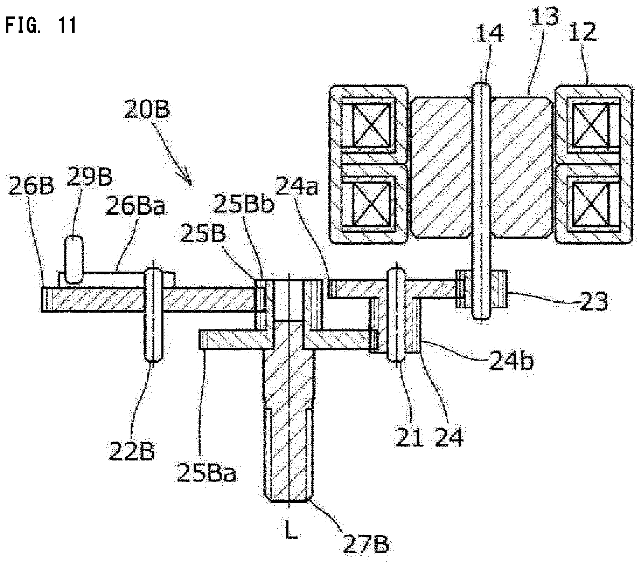

FIG. 7 is a longitudinal cross-sectional view illustrating a valve closed state of a flow rate control valve 1B according to a second embodiment, and FIG. 8 is a planar view of a cross-section taken at line B-B of the flow rate control valve 1B illustrated in FIG. 7. FIG. 9 is a longitudinal cross-sectional view illustrating a valve opened state of the flow rate control valve 1B according to the second embodiment, and FIG. 10 is a planar view of a cross-section similar to FIG. 8 of the flow rate control valve illustrated in FIG. 9. FIG. 11 is a view illustrating a gear train adopted in the flow rate control valve 1B in expansion such that axis lines of the respective gears are positioned within a same plane, with a portion thereof simplified.

### (Configuration of Flow Rate Control Valve)

The flow rate control valve 1B includes a driving unit 10B, a reduction unit 20B, and the valve mechanism unit 30. Also, according to the present embodiment, an axis line of the valve mechanism unit 30 is denoted as L. A side on which a motor is disposed is referred to as an upper side, and a side on which a valve element is disposed is referred to as a lower side.

The driving unit 10B according to the present embodiment includes a support cylinder 16B. On a lower surface of a top part of the support cylinder 16B, a fixed shaft 16Ba is formed coaxially with the axis line L. An annular member 17B does not have a pin disposed thereon. Instead, a pin 29B is provided downward at a position spaced apart from the axis line L on the lower surface of the support cylinder 16B.

The reduction unit 20B includes the first shaft 21 and an idling shaft 22B each having both ends thereof retained by a lower surface of the top part of the support cylinder 16B and an upper surface of the annular member 17B, the drive gear 23 fixed to a lower end of the drive shaft 14, the first transmission gear 24 retained rotatably with respect to the first shaft 21, a final gear 25B retained rotatably with respect to the fixed shaft 16Ba and connected coaxially with a screw shaft 27B, and an idle gear 26B connected coaxially with the idling shaft 22B and meshing with the final gear 25B. The final gear 25B constitutes a rotating body. Components that are common with the above-mentioned embodiment are denoted with the same reference numbers, and descriptions thereof are omitted.

A protruded portion 26Ba is formed on an upper surface of the idle gear 26B. The protruded portion 26Ba is formed in a narrow fan shape when viewed in the direction of the axis line L, as illustrated in FIGs. 8 and 10. One end surface of the protruded portion 26Ba facing the circumferential direction is referred to as an end surface 26Bb, and the other surface thereof is referred to as an end surface 26Bc. The angle from the end surface 26Bb to the end surface 26Bc is set to a predetermined value.

The first transmission gear 24 is formed by coaxially connecting the first input gear portion 24a meshing with the drive gear 23 and the first output gear portion 24b. The final gear 25B is formed by coaxially connecting an input gear portion 25Ba meshing with the first output gear portion 24b and an output gear portion 25Bb meshing with the idle gear 26B.

According to the flow rate control valve 1B, in a state where the male screw shaft 27B rotates for a predetermined angle after the valve element 33 had been seated, the end surface 26Bb (first engagement portion) of the protruded portion 26Ba of the idle gear 26B comes into contact with the pin 29 (second engagement portion) such that further rotation of the final gear 25B is prevented. Such a state is illustrated in FIG. 8. That is, the pin 29 (second engagement portion) and the end surface 26Bb (first engagement portion) respectively function as a lower limit-side stopper of the valve element.

In contrast, in a state where the male screw shaft 27B rotates in an opposite direction when opening the valve, the end surface 26Bc (third engagement portion) of the protruded portion 26Ba of the idle gear 26B is in contact with the pin 29 (fourth engagement portion), such that further reverse rotation of the final gear 25B is prevented. Such a state is illustrated in FIG. 10. That is, the pin 29 (fourth engagement portion) and the end surface 26Bc (third engagement portion) respectively function as an upper limit-side stopper of the valve element.

In the present embodiment, the number of teeth ZA of the drive gear 23 is smaller than the number of teeth ZB of the first input gear portion 24a. Further, a number of teeth ZG of the input gear portion 25Ba of the final gear 25B is smaller than the number of teeth ZC of the first output gear portion 24b. Therefore, while the rotational force is transmitted from the drive gear 23 to the final gear 25B, reduction at a reduction ratio of (ZB/ZA) × (ZC/ZG) is realized. Meanwhile, since a number of teeth ZH of the output gear portion 25Bb of the final gear 25B is smaller than a number of teeth ZI of the idle gear 26B, the rotation of the idle gear 26B is reduced at a reduction ratio of (ZI/ZH) with respect to the final gear 25B.

According to the present embodiment, a rotation angle of the idle gear 26B increases with respect to the rotation angle of the final gear 25B, such that a timing at which the pin 29 comes into contact with the end surface 26Bb can be set with higher accuracy. Further, an amount of lift of the valve element 33 with respect to a rotation angle of the drive gear 23 can be increased without changing the timing at which the pin 29 comes into contact with the end surface 26Bb. Thereby, pressure loss during fully-opened state of the valve can be reduced, such that the orifice diameter can be reduced and load of differential pressure can be expected to be reduced.

### [Third Embodiment]

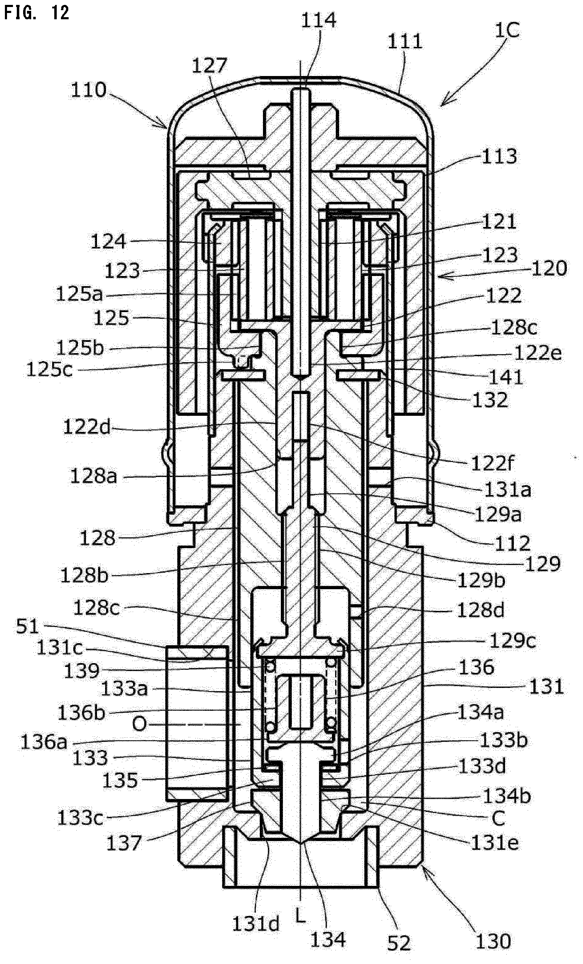

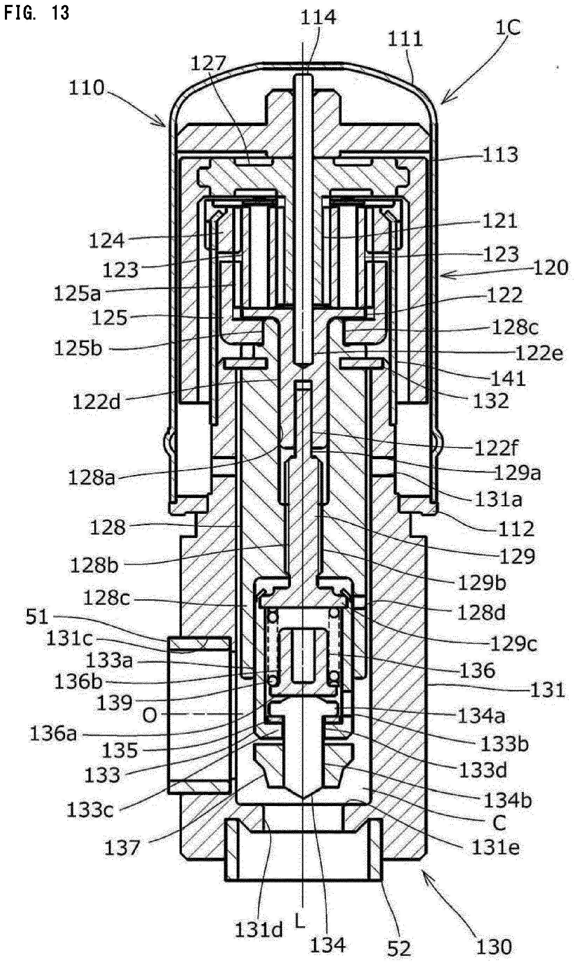

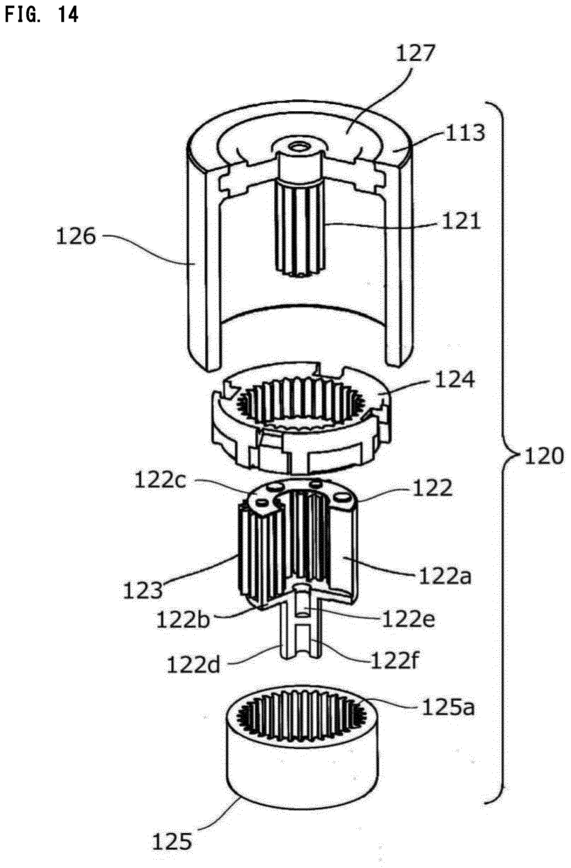

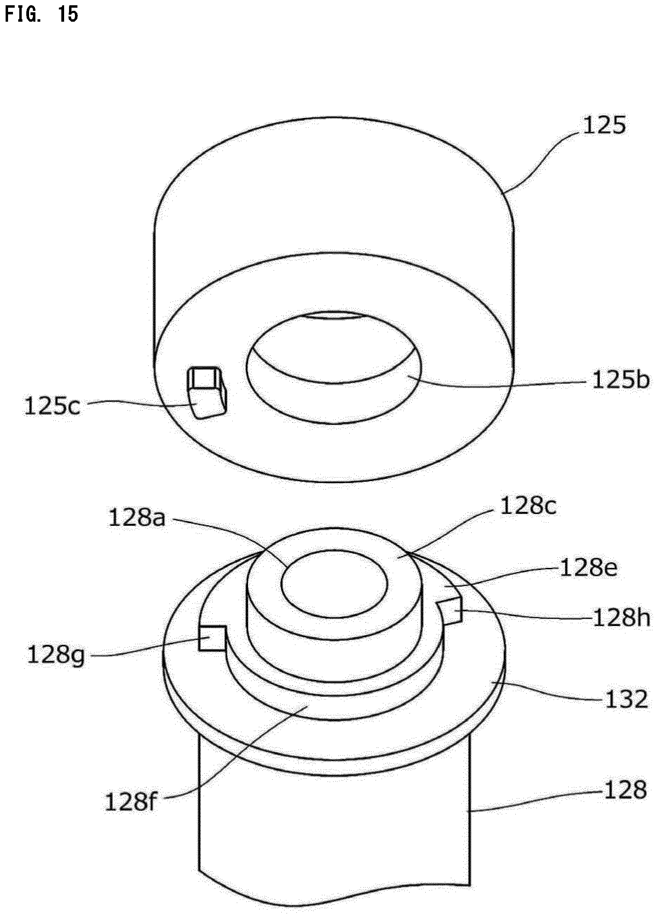

FIG. 12 is a longitudinal cross-sectional view illustrating a valve closed state of a flow rate control valve 1C according to a third embodiment, and FIG. 13 is a longitudinal cross-sectional view illustrating a valve opened state of the flow rate control valve 1C according to the third embodiment, wherein the stator is not shown. FIG. 14 is a view showing a planetary gear mechanism in an exploded state. FIG. 15 is a perspective view illustrating a lower surface of a gear body 125 and an upper surface of a female screw cylinder 128.

### (Configuration of Flow Rate Control Valve)

The flow rate control valve 1C includes a driving unit 110, a planetary gear-type reduction mechanism (hereinafter referred to as "reduction unit") 120 to which rotational force by the driving unit 110 is entered and gear reduction is performed, and a valve mechanism unit 130. An axis line of the flow rate control valve 1C is referred to as L. Further, a motor side is referred to as an upper side, and a valve element side is referred to as a lower side.

A can 111 arranged on an inner side in a radial direction of a stator not shown in the drawing is an airtight container having a lower end thereof fixed to a valve body 131 via an annular receiving member 112, and it is formed in the shape of a thin cylinder with a top part. The driving unit 110 includes a permanent magnet-type rotor assembly 113 that is driven to rotate by a stator not shown. The rotor assembly 113 is rotatably supported within the can 111. A stepping motor serving as an example of an electric motor is composed of a stator and the rotor assembly 113.

The reduction unit 120 includes, as illustrated in FIG. 14, a sun gear 121 formed integrally with the rotor assembly 113, a plurality of (three according to the present embodiment) planetary gears 123 that are elongated in the axial direction that mesh with the sun gear 121 and that are supported rotatably by a carrier 122 formed by molding plastic, a ring gear 124 that is arranged coaxially with the sun gear and that meshes with one portion (upper side portion) of each planetary gear 123, and a gear body 125 equipped with an output gear portion 125a with internal teeth whose number of teeth slightly differs from the number of teeth of the ring gear 124 (in other words, that is in a profile shift relationship with the ring gear 124). It is preferable for the sun gear 121, the carrier 122, the ring gear 124, and the gear body 125 to be formed of PPS (polyphenylene sulfide resin). The gear body 125 constitutes a rotating body.

As can be recognized from FIG. 14, each planetary gear 123 meshes with the ring gear 124 and also meshes with the output gear portion 125a of the gear body 125 at one portion (lower side portion) thereof.

The rotor assembly 113 has a barrel 126 serving as a peripheral wall and a sun gear member 127 arranged on a center thereof formed integrally and in the form of a cylinder with a top part formed of a plastic material (PPS according to the present example) containing a magnetic material. Further, the rotor assembly 113 is supported rotatably within the can 111 by a shaft 114 (FIGs. 12 and 13) that passes through the sun gear member 127 in the axial direction.

As illustrated in FIG. 14, the sun gear 121 is formed on an outer circumference of a cylinder installed at a center of the sun gear member 127. The ring gear 124 is a ring-shaped gear formed by molding plastic, for example.

According to this configuration, in a state where the sun gear 121 rotates on its own axis by the input of rotation from the electric motor, the planetary gears 123 meshing with the sun gear 121 and the ring gear 124 rotate while revolving around the sun gear 121. Since the planetary gear 123 meshes with the gear body 125 which is in a profile-shifted relationship with the ring gear 124, the gear body 125 rotates at a relatively extremely high reduction ratio, such as 50 to 1, with respect to the ring gear 124 according to the level of profile shift (difference between number of teeth). A planetary gear mechanism in which the planetary gears 123 are meshed with the ring gear 124 and the output gear portion 125a in a profile-shifted relationship is referred to as a paradox planetary gear mechanism.

The carrier 122 includes a lower side disk 122b formed by installing three pillar portions 122a in parallel on the outer circumference of the upper surface, an annular plate 122c, and a cylindrical carrier shaft portion 122d that extends downward from a center of the lower side disk 122b, and wherein the lower side disk 122b and the plate 122c are fixed in parallel via the pillar portions 122a. A fitting hole 122e to which a lower end of the shaft 144 is rotatably fit is coaxially formed on an upper end side of the carrier shaft portion 122d, and an engaging hole 122f is coaxially formed on a lower end side thereof. The engaging hole 122f has a cross-sectional surface orthogonal to the axis line L with a noncircular shape, such as a D-shape.

Both ends of each planetary gear 123 formed of zinc alloy are retained rotatably by the lower side disk 122b and the plate 122c between the pillar portions 122a that are adjacent one another in the circumferential direction, by which the planetary gear 123 is enabled to rotate with respect to the carrier 122.

In FIGs. 12 and 13, the female screw cylinder 128 is arranged below the carrier 122. The female screw cylinder 128 is fixed and connected to an upper end of the valve body 131 via an annular plate 132.

The female screw cylinder 128 is made of resin having superior sliding characteristics, such as a PTFE (polytetrafluoroethylene), and the annular plate 132 made of metal is fixed near an upper end thereof through insert molding, for example. The female screw cylinder 128 includes a cylindrical opening 128a formed at a center of an upper end thereof, a female screw portion 128b communicated with the opening 128a, and a thin cylinder portion 128c formed on a lower end side. The carrier shaft portion 122d is relatively rotatably fit to the opening 128a.

In FIG. 15, a projected portion 125c is formed on a lower surface of the gear body 125 at a position spaced apart from the axis line. Meanwhile, a locking portion 128e is formed on an upper surface of the female screw cylinder 128 below the thin cylinder portion 128c. The locking portion 128e includes a guide portion 128f having a semi-cylindrical surface shape that extends across a predetermined angle, a stepped portion 128g formed on one end in the circumferential direction of the guide portion 128f, and a stepped portion 128h formed on the other end thereof. The projected portion 125c constitutes a first engagement portion and a third engagement portion, the stepped portion 128g constitutes a second engagement portion, and the stepped portion 128h constitutes a fourth engagement portion.

By having the gear body 125 guided by the outer circumference portion of the thin cylinder portion 128c, the rotation axis of the gear body 125 is fixed, and the rotation of the respective gears are stabilized. Further, by providing the projected portion 125c at a position close to and in the same direction as the guide arranged below the output gear portion 125a, load will not easily occur in the direction intersecting the rotation axis of the gear when the projected portion 125c comes into contact with the stepped portion 128g, such that wear of the gear can be reduced. The first to fourth engagement portions will be described below.

Further according to the present embodiment, the projected portion 125c is formed on the lower surface of the gear body 125 and the locking portion 128e (the stepped portion 128g) is formed on the upper surface of the female screw cylinder 128, but of course, the projected portion 125c can be formed on the upper surface of the gear body 125 and the locking portion 128e (the stepped portion 128g) can be formed on the lower surface of the ring gear 124. In that case, by guiding the outer circumference of the gear body 125 and the inner circumference of a gear case 141, load will not easily occur in the direction intersecting the rotation axis of the gear, such that wear of the gear can be reduced. Of course, it is possible to form the projected portion 125c on a side face of the gear body 125 and to arrange the locking portion 128e accordingly.

In a state where the thin cylinder portion 128c reduced in diameter of the female screw cylinder 128 is fit to a bottom opening 125b of the gear body 125 by which the gear body 125 and the female screw cylinder 128 are assembled, the upper surface of the locking portion 128e comes into contact with the lower surface of the gear body 125. In this state, the gear body 125 and the female screw cylinder 128 are relatively rotatable, by which the projected portion 125c moves relatively along the outer circumference of the guide portion 128f.

In FIGs. 12 and 13, a male screw member 129 inserted to the female screw cylinder 128 is formed by consecutively connecting an engagement portion 129a, a male screw portion 129b, and a disk portion 129c. The engagement portion 129a has a cross section orthogonal to the axis line L formed in a noncircular shape, similar to the engaging hole 122f, and it is capable of moving relatively in the axial direction with respect to the engaging hole 122f in a state engaged with the engaging hole 122f, but it rotates integrally therewith in the rotation direction. The male screw portion 129b is engaged with the female screw portion 128b. The male screw member 129 constitutes a moving body.

Since the annular plate 132 fixed to the female screw cylinder 128 is joined to the valve body 131 by welding etc., when the male screw member 129 rotates, the male screw portion 129b moves in screwing motion against the female screw portion 128b. Thereby, axial direction force is applied from the female screw cylinder 128, such that the male screw member 129 is displaced in the axial direction for an amount corresponding to the rotation angle. Since the female screw cylinder 128 is formed of PTFE, lubricant such as grease is not necessary. The male screw member 129 and the female screw cylinder 128 constitute a conversion mechanism.

The disk portion 129c is arranged within the thin cylinder portion 128c of the female screw cylinder 128. A communicating hole 128d is formed on a peripheral wall of the thin cylinder portion 128c.

Next, the valve mechanism unit 130 will be described.

The valve body 131 formed of metal has a relatively thick hollow cylindrical shape, and as described above, the lower end of the can 111 is fixed thereto via the receiving member 112 having an annular shape, and the outer circumference of the upper end of the valve body 131 and the outer circumference of the ring gear 124 are connected by the gear case 141 which is a thin cylindrical member. In the valve body 131, a communicating hole 131a is formed to the peripheral wall between the gear case 141 and the receiving member 112. The inner side of the valve body 131 constitutes the valve chamber C.

The first piping 51 constituting a first flow path in a manner orthogonal to the axis line L is connected to an opening 131c formed to an outer circumference in the vicinity of the lower end of the valve body 131. The axis line of the first piping 51 is referred to as O.

Further, an opening formed coaxially with the axis line L at the lower end of the valve body 131 constitutes an orifice 131d. Further, an upper end of the orifice 131d constitutes a valve seat 131e. The second piping 52 is connected to the valve body 131 in a manner communicating with the orifice 131d.

A sleeve member 133 having a bottomed cylinder shape is arranged on a lower side of the male screw member 129. The sleeve member 133 is formed by consecutively connecting a cylinder portion 133a fit slidably to an inner circumference of the thin cylinder portion 128c, and a bottom portion 133c. A communicating hole 133b is formed to a peripheral wall of the cylinder portion 133a. An upper end of the cylinder portion 133a is fixed by caulking to an outer circumference of the disk portion 129c of the male screw member 129, such that the sleeve member 133 and the male screw member 129 move integrally together. The bottom portion 133c includes a circular opening 133d at a center thereof.

A needle member 134 is formed by consecutively connecting a flange portion 134a and a barrel portion 134b having a smaller diameter than the flange portion 134a. A spacer 135 is arranged between the flange portion 134a and the bottom portion 133c of the sleeve member 133.

If the barrel portion 134b is fit to the circular opening 133d in a state where the flange portion 134a is arranged within the sleeve member 133, a lower end side of the barrel portion 134b protrudes from the sleeve member 133, but since the flange portion 134a is caught by the edge of the circular opening 133d, the needle member 134 will not fall from the sleeve member 133.

A cylindrical holder 136 is arranged on an upper side of the flange portion 134a of the needle member 134. The holder 136 is formed by consecutively connecting a circular flange portion 136a and a cylinder portion 136b.

A coil spring 139 is arranged on an outer side of the cylinder portion 136b with a lower end thereof in contact with an upper surface of the circular flange portion 136a. An upper end of the coil spring 139 serving as an urging member is in contact with a lower surface of the disk portion 129c. Therefore, the needle member 134 is constantly urged downward with respect to the male screw member 129 via the holder 136 by the coil spring 139.

A valve element 137 having an annular shape is press-fit to an outer circumference of the barrel portion 134b projected downward from the sleeve member 133. An outer circumference surface of the valve element 137 is formed in a conical shape that is reduced in diameter toward the lower side. Further, the lower end of the needle member 134 can also adopt a conical shape. In a state where the needle member 134 is pressed downward, a predetermined gap is formed between a lower surface of the sleeve member 133 and an upper surface of the valve element 137, and the sleeve member 133 and the needle member 134 can be relatively displaced in the axial direction corresponding to the gap. This gap can be adjusted by changing the thickness of the spacer 135.

### (Operation of Flow Rate Control Valve)

An operation of the flow rate control valve 1C according to the present embodiment will be described. The first piping 51 and the second piping 52 are connected to a refrigeration cycle, wherein the first piping 51 serves as an inlet-side piping and the second piping 52 serves as an outlet-side piping.

### (When Closing Valve)

In a valve opened state, when power is supplied from an external power supply according to a control signal, a stator not shown generates magnetic force. The rotor assembly 113 is driven to rotate for an angle corresponding to the magnetic force, and rotational force is generated in a predetermined direction. Such a rotational force is transmitted to the sun gear 121, reduced via the reduction unit 120, and transmitted to the output gear portion 125a, by which the gear body 125 rotates about the axis line L.

The male screw member 129 rotates along with the rotation of the gear body 125. A rotary motion of the male screw member 129 is converted into an axial direction movement via a conversion mechanism, and thereby, the male screw member 129 is displaced downward with respect to the gear body 125. In a state where the male screw member 129 is displaced downward, the sleeve member 133, the holder 136, the needle member 134 and the valve element 137 are also displaced downward. In this state, the projected portion 125c also relatively moves along the outer circumference of the guide portion 128f and approximates the stepped portion 128g.

After an outer circumference surface of the valve element 137 is seated on the valve seat 131e, the sleeve member 133 relatively moves downward with respect to the needle member 134 whose position is fixed, and the coil spring 139 is compressed further. In this state, the coil spring 139 exerts a shock absorbing effect of weakening the shock when the valve element is seated. Further, the male screw member 129 descends and the valve element 137 is pressed with predetermined urging force against the valve seat 131e, by which the valve closed state is ensured, so that the flow of refrigerant passes from the first piping 51 through the valve chamber C toward the second piping 52 is shut off. This state is illustrated in FIG. 11.

In the present embodiment, the projected portion 125c (first engagement portion) comes into contact with the stepped portion 128g (second engagement portion) of the guide portion 128f before the gap between the lower surface of the sleeve member 133 and the upper surface of the valve element 137 becomes zero, such that further rotation and lowering of the male screw member 129 is prevented. That is, the projected portion 125c (first engagement portion) and the stepped portion 128g (second engagement portion) respectively function as a lower limit-side stopper of the valve element.

Thereby, the only pressing force applied to the valve element 137 is the urging force of the coil spring 139, such that excessive increase of pressing force generated between the valve element 137 and the valve seat 131e can be prevented. In this state, even if foreign matter is bitten between the valve element 137 and the valve seat 131e, since the pressing force is relatively low, indentation will not occur, so that if the foreign matter drops out when the valve is opened for the next time, a good sealing efficiency between the valve element 137 and the valve seat 131e can be ensured.

According to the present embodiment, the gear body 125 and the female screw cylinder 128 are not relatively moved in the axial direction, and the projected portion 125c and the stepped portion 128g will be in contact with each other at the same position, such that a contact area can be ensured and durability can be enhanced.

### (When Opening Valve)

Meanwhile, the rotor assembly 113 is driven to rotate by power fed from an external power supply according to a control signal of reverse characteristics, by which rotational force is generated in the opposite direction. This rotational force is transmitted to the sun gear 121, reduced via the reduction unit 120, and transmitted to the output gear portion 125a, by which the gear body 125 rotates in the opposite direction about the axis line L.

The male screw member 129 rotates along with the rotation of the gear body 125. Rotary motion of the male screw member 129 is converted into axial direction movement via a conversion mechanism, and thereby, the male screw member 129 is displaced upward with respect to the gear body 125. In a state where the male screw member 129 is displaced upward, the sleeve member 133, the holder 136, the needle member 134, and the valve element 137 are also displaced upward. In this state, the projected portion 125c also moves relatively along the outer circumference of the guide portion 128f.

In a state where the outer circumference surface of the valve element 137 is separated from the valve seat 131e, the refrigerant entering the valve chamber C from the first piping 51 passes through the gap between the valve element 137 and the valve seat 131e and flows out via the orifice 131d toward the second piping 52. The gap between the valve element 137 and the valve seat 131e changes according to the rotation angle of the sun gear 121, such that by adjusting the rotation angle of the sun gear 121, the amount of refrigerant flowing from the first piping 51 to the second piping 52 can be adjusted. This state is illustrated in FIG. 13.

In this state, the refrigerant flowing into the valve chamber C enters the thin cylinder portion 128c via the communicating hole 128d, enters the sleeve member 133 via the communicating hole 133b, and further enters the can 111 via the communicating hole 131a, such that pressure differences between respective portions within the flow rate control valve 1C that may disturb the operation can be solved.

Further according to the present embodiment, even if the sun gear 121 rotates excessively in the opposite direction by a step-out phenomenon, for example, the projected portion 125c (third engagement portion) comes into contact with the stepped portion 128h (fourth engagement portion) of the guide portion 128f, such that further rotation and elevation of the male screw member 129 is prevented. That is, the projected portion 125c (third engagement portion) and the stepped portion 128h (fourth engagement portion) respectively function as an upper limit-side stopper of the valve element.

### [Fourth Embodiment]

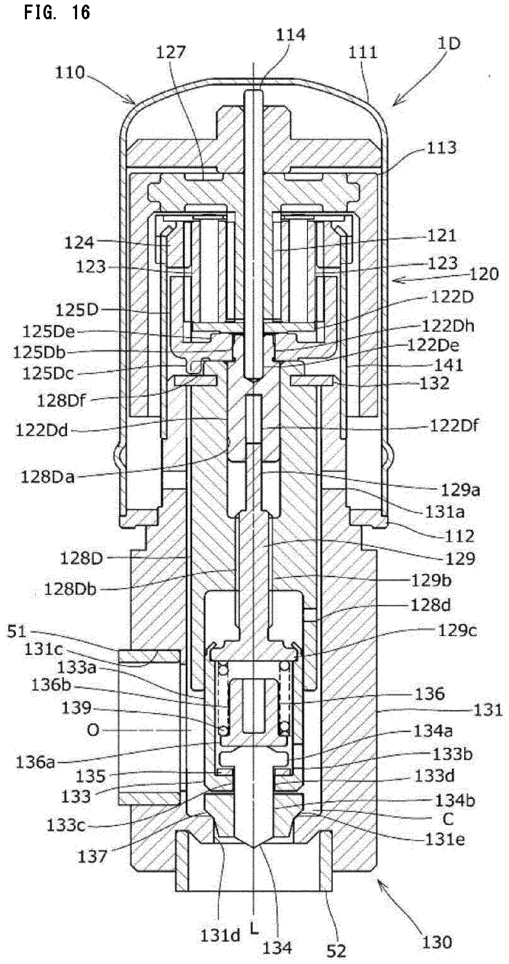

FIG. 16 is a longitudinal cross-sectional view illustrating a valve closed state of a flow rate control valve 1D according to a fourth embodiment, similarly with the stator omitted. The present embodiment mainly differs from the third embodiment in that the shapes of a gear body 125D and a female screw cylinder 128D are different, and that a carrier 122D and a shaft portion 122Dd are separated. Components common to the embodiments described above are denoted with the same reference numbers, and descriptions thereof are omitted.

The gear body 125D serving as a rotating body includes an annular portion 125De protruded upward from a circumference of an upper end at a center bottom opening 125Db. A disk-shaped carrier 122D is slidably arranged on the upper surface of the annular portion 125De. The female screw cylinder 128D does not have a thin cylinder portion, and an upper end surface thereof faces a lower surface of the gear body 125D.

An upper end portion 122Dh reduced in diameter of the shaft portion 122Dd is press-fit to an inner circumference of the bottom opening 125Db of the gear body 125D, and a lower end side of the shaft portion 122Dd is slidably fit to an opening 128Da of the female screw cylinder 128D. An upper end surface of the shaft portion 122Dd is arranged to face a lower surface of the carrier 122D. The engagement portion 129a of the male screw member 129 is fit to an engagement hole 122Df of the shaft portion 122Dd. A lower end of the shaft 114 passes through a center opening of the carrier 122D and is relatively rotatably fit to a fitting hole 122De of the shaft portion 122Dd.

According to the present embodiment, instead of having the carrier 122D and the shaft portion 122Dd relatively rotate, the gear body 125D and the shaft portion 122Dd are rotated integrally. Therefore, the male screw member 129 rotates simultaneously via the engagement of the engagement hole 122Df and the engagement portion 129a. Thereby, relative screw motion of a female screw portion 128Db and the male screw portion 129b is realized, and the valve element 137 is displaced in the direction of the axis line L.

The gear body 125D is a gear that is reduced most by the reduction unit 120, but in the present configuration, the rotation angle in which the gear body 125D is allowed to rotate is small (such as less than 360 degrees) so that in the present embodiment, a screw pitch of the female screw portion 128Db and the male screw portion 129b is made relatively large so as to ensure the required amount of lift of the valve element 137.

Other than increasing the screw pitch, a means for ensuring the amount of list includes adopting a multiple thread screw (such as a double-thread screw) as the female screw portion 128Db and the male screw portion 129b. Adopting such a multiple thread screw is effective, since if the screw diameter is small, the stiffness of the screw may be insufficient by merely increasing the screw pitch.

Even according to the present embodiment, a projected portion 125Dc is formed on a lower surface of the gear body 125D at a position spaced apart from the axis line. Similar to the embodiment described above, by providing the projected portion 125Dc at a position close to an upper end of the shaft portion 122Dd, load is not easily generated in a direction orthogonal to the rotation axis of the gear even in a state where the projected portion 125Dc comes into contact with a stepped portion of the female screw cylinder 128D, such that wear of the gear can be reduced. The projected portion 125Dc constitutes a first engagement portion and a third engagement portion, and a stepped portion of a guide portion 128Df of the female screw cylinder 128D constitutes a second engagement portion and a fourth engagement portion.

The present embodiment characterizes in that the rotation angle of the male screw member 129 is small compared to the above-described embodiment. Therefore, a projected portion is provided on the male screw member 129 instead of providing a projected portion on the gear body 125D, and a protruded portion opposed thereto is disposed on the female screw cylinder 128D or the valve body 131, wherein the members are arranged at positions capable of being in contact with one another, such that excessive rotation of the male screw member 129 can be suppressed. In that case, the male screw member 129 constitutes the rotating body and the moving body.

### [Reference Signs List]

1, 1B, 1C, 1D flow rate control valve
10, 10B driving unit
20, 20B reduction unit
26a arc-shaped groove of final gear
26Ba protruded portion of idle gear
29 pin
30, 130 valve mechanism unit
31 valve body
32 valve stem
33, 137 valve element
120 reduction unit (planetary gear mechanism)
125c, 125Dc projected portion of gear body
128g stepped portion of female screw cylinder

## Claims

1. A flow rate control valve comprising:
a valve body provided with a valve seat;
a reduction unit configured to reduce and transmit a rotation of a motor to a rotating body;
a conversion mechanism configured to move a moving body in an axial direction according to a rotational movement of the rotating body; and
a valve element configured to move according to an axial direction movement of the moving body and move in reciprocating motion with respect to the valve seat;
wherein a first engagement portion provided on the rotating body and a second engagement portion provided on the valve body are configured to move toward or away from each other according to a rotation of the rotating body, and
wherein, after the valve element is seated on the valve seat, the first engagement portion and the second engagement portion come into contact with each other, and a rotation of the rotating body is stopped.

2. The flow rate control valve according to claim 1, further comprising an urging member configured to urge the valve element toward the valve seat with respect to the moving body.

3. The flow rate control valve according to claim 1 or claim 2,
wherein the reduction unit is composed of a plurality of gears, and
wherein the rotating body is a gear connected to the moving body.

4. The flow rate control valve according to claim 1 or claim 2,
wherein the reduction unit is composed of a plurality of gears, and
wherein the rotating body is a gear that is different from a gear connected to the moving body.

5. The flow rate control valve according to any one of claims 1 to 4,
wherein the rotating body is displaced in an axial direction while rotating, and the first engagement portion comes into contact with the second engagement portion after the rotating body has rotated for multiple times.

6. The flow rate control valve according to claim 1 or claim 2,
wherein the reduction unit includes a planetary gear mechanism, and the rotating body is a gear body of the planetary gear mechanism.

7. The flow rate control valve according to claim 1 or claim 2,
wherein the reduction unit includes a planetary gear mechanism, and the conversion mechanism is composed of a male screw member that rotates together with a gear body of the planetary gear mechanism and a female screw cylinder that is engaged with the male screw member, and wherein the rotating body is the male screw member.

8. The flow rate control valve according to any one of claims 1 to 7,
further comprising a third engagement portion arranged on the rotating body, and a fourth engagement portion arranged on the valve body, and
wherein, after the valve element is separated for a predetermined distance from the valve seat, the third engagement portion and the fourth engagement portion come into contact with each other.

9. The flow rate control valve according to claim 8,
wherein the second engagement portion also serves as the fourth engagement portion.

## Amended claims

### Amended claims under Art. 19.1 PCT

1. A flow rate control valve comprising:
a valve body provided with a valve seat;
a reduction unit configured to reduce and transmit a rotation of a motor to a rotating body;
a conversion mechanism configured to move a moving body in an axial direction according to a rotational movement of the rotating body; and
a valve element configured to move according to an axial direction movement of the moving body and move in reciprocating motion with respect to the valve seat;
wherein a first engagement portion provided on the rotating body and a second engagement portion provided on the valve body are configured to move toward or away from each other according to a rotation of the rotating body,
wherein after the valve element is seated on the valve seat, the first engagement portion and the second engagement portion come into contact with each other, and a rotation of the rotating body is stopped, and
wherein the rotating body is guided so as to slide in a female screw cylinder fixed to the valve body.

2. The flow rate control valve according to claim 1,
wherein the reduction unit includes a planetary gear mechanism, and the rotating body is a gear body of the planetary gear mechanism,
wherein the conversion mechanism is composed of a male screw member that rotates together with the gear body and a female screw cylinder that is engaged with the male screw member, and
wherein the male screw member is the moving body.

3. The flow rate control valve according to claim 2,
wherein the gear body is guided so as to slide against an outer circumference portion of the female screw cylinder.

4. The flow rate control valve according to claim 3,
wherein a planetary gear mechanism includes a sun gear formed integrally with a rotor of the motor, a carrier rotatably supporting a planetary gear meshing with the sun gear, a ring gear fixed to the valve body side coaxially with the sun gear and meshing with the planetary gear, and a gear body including an output gear portion having internal teeth with a number of teeth that differs from a number of teeth of the ring gear formed on an inner circumference thereof, and
wherein the carrier includes a carrier shaft portion that is slidably fit to an inner circumference portion of the female screw cylinder.

5. The flow rate control valve according to claim 2,
further comprising a shaft portion slidably fit to an inner circumference portion of the female screw cylinder, and
wherein the gear body is fixed to the shaft portion.

6. The flow rate control valve according to claim 2,
wherein the rotating body is the male screw member.

7. The flow rate control valve according to claim 1,
further comprising an urging member configured to urge the valve element toward the valve seat with respect to the moving body.

8. The flow rate control valve according to claim 1,
further comprising a third engagement portion arranged on the rotating body, and a fourth engagement portion arranged on the valve body, and
wherein, after the valve element is separated for a predetermined distance from the valve seat, the third engagement portion and the fourth engagement portion come into contact with each other.

9. The flow rate control valve according to claim 8,
wherein the second engagement portion also serves as the fourth engagement portion.
